# EUROPEAN PATENT SPECIFICATION

(11) **EP 0 207 537 B1**
(45) Date of publication and mention of the grant of the patent: **13.01.1993**
(21) Application number: 86200893.5
(22) Date of filing: 22.05.1986
(51) Int. Cl.: G01N 33/28, G01N 30/46

(54) **Chromatographic analyzer**
Chromatographische Analyse
Analyseur chromatographique

(30) Priority: 28.06.1985 US 750343
(43) Date of publication of application: 07.01.1987
(73) Proprietor: SHELL INTERNATIONALE RESEARCH MAATSCHAPPIJ B.V., 2596 HR Den Haag (NL)
(72) Inventor: Szakasits, Julius Jozsef, Houston, TX 77070 (US); Robinson, Robert Eugene, Houston, TX 77070 (US)

(56) References cited:
- EP-A- 0 127 908
- US-A- 4 384 471
- CHROMATOGRAPHIA, vol. 13, no. 8, August 1980, Friedr.Vieweg & Sohn VerlagsgesmbH; H.BOER et al., pp. 500-512

## Description

This invention relates generally to analysis of samples by gas chromatography and more particularly, relates to the analysis of hydrocarbon samples by gas chromatography.

It is important to be able to analyze a hydrocarbon sample quickly and cheaply. This importance is particularly acute in the petrochemical and chemical industries. This is because there may be frequent changes in the composition of feedstocks employed in the various processes that are involved in either the petrochemical or chemical industries. This has created the need for an on-site instrument which can quickly provide an analysis of the feed and/or product composition during plant operation to ensure that the feed and product composition are within desired ranges. The failure to recognize poor plant performance, which may result in out of specification products, at an early stage can lead to a serious loss in economic revenues.

Prior art analysis has generally consisted of a combination of gas chromatography and analytical chemistry methods conducted in some central laboratory which is normally remote from the chemical or petrochemical plant. The employment of these two (gas chromatography and analytical chemistry) methods is usually a time consuming and expensive proposition. Further, it often results in a lengthy time period between the time when the sample is actually taken and when the results are made available to the plant. This may exacerbate any potential economic loss due to poor plant performance during this time.

These and other limitations and disadvantages of the prior art are overcome by the present invention. It is therefore an object of the present invention to provide an improved gas chromatographic apparatus for analyzing hydrocarbon samples. The invention therefore provides an apparatus for analyzing a hydrocarbon sample for iso-paraffins, normal paraffins, naphthenes, aromatics (and olefins, if present) comprising means for providing a sample; means for supplying gas connected to said sample providing means; valve means connected to said sample providing means; a first highly polar gas chromatographic column having a length of from 1 to 3 metres and an inner diameter of from 1.5 to 3.0 millimetres, connected to said valve means, for separating the aromatics fraction from the non-aromatics fraction; the said first column being selectively interconnected with a second column, which is a 13X molecular sieve open coated capillary column from 50 to 150 metres in length and having an inner diameter of from 0.1 to 0.5 millimetres, for separating isoparaffins and co-eluting olefins, normal paraffins and naphthenes by carbon number; and with a third less polar column which is not a mixed binary phase column from 100 to 125 metres in length and having an inner diameter of from 0.25 to 0.32 millimetres and containing a uniform film of a stable less polar phase of a thickness of from 0.75 to 1.0 microns, which third column separates the individual paraffins and naphthenes and olefins; or with a fourth less polar column from about 10 to 25 metres in length and having an inner diameter of 0.30 to 0.50 millimetres for separating the individual aromatics; and means for controlling the temperature of each column.

It can be remarked that EP-A-0,127,908 discloses an apparatus for analyzing a hydrocarbon sample comprising paraffins, naphthenes and aromatics. This known apparatus comprises means for providing a sample, a polar column, a 13X molecular sieve coated open tubular column, a non-polar stationary phase column, a valve means, detection means and means for supplying gas.

However, this apparatus is relatively restricted in use and time-consuming as it allows an analysis for paraffins, naphthenes and aromatics only in about two hours.

The present invention now provides a detailed analysis in approximately one and one-half hours of the isoparaffins, normal paraffins, naphthenes, aromatics and olefins of a hydrocarbon sample boiling below about 255 °C, including the C₅/C₆ ring naphthenes distribution within that sample. The data provided by the present invention can be used as, for example but not limited to, an input into a plant model to determine what control actions are necessary to optimize a reformer process.

The present invention uses a plurality of columns and detectors to expand the analyzer scope and to shorten the analysis time by performing various analyses concurrently. In an advantageous embodiment the present invention can be provided with a means for splitting the sample before it is passed through the highly polar column and a portion that is split off before the highly polar column is supplied to a column having a material for separating predetermined inorganic compounds. The column having material for separating at least one predetermined inorganic compound has an appropriate detector means for detecting the amount of predetermined component that is separated by this column.

The invention will now be described by way of example in more detail with reference to the accompanying drawings in which:
Fig. 1 is a diagrammatic view of one embodiment of a chromatographic analyzer according to the present invention;
Fig. 2 is a diagrammatic view of a portion of the analyzer depicted in Fig. 1 in a different operating position;
Fig. 3 is a simplified flow diagram of the analyzer of Fig. 1 in one operating configuration;
Fig. 4 is a simplified flow diagram of the apparatus of Fig. 1 in a second operating configuration;
Fig. 5 is a typical chromatogram of the component-by-component separation of a non-aromatic fraction of a typical hydrocarbon sample with the first less polar column of the analyzer of Fig. 1;
Fig. 6 is a chromatogram of the normal paraffins, naphthenes, and isoparaffins with coeluting olefins by carbon number separation of a typical hydrocarbon sample with the 13X MSCOT (molecular sieve coated open tubular) column of the analyzer of Fig. 1;
Fig. 7 is a chromatogram showing the separation of the aromatics from a typical hydrocarbon sample with the second less polar column of the analyzer of Fig. 1; and
Fig. 8 is an alternative embodiment of the present invention.

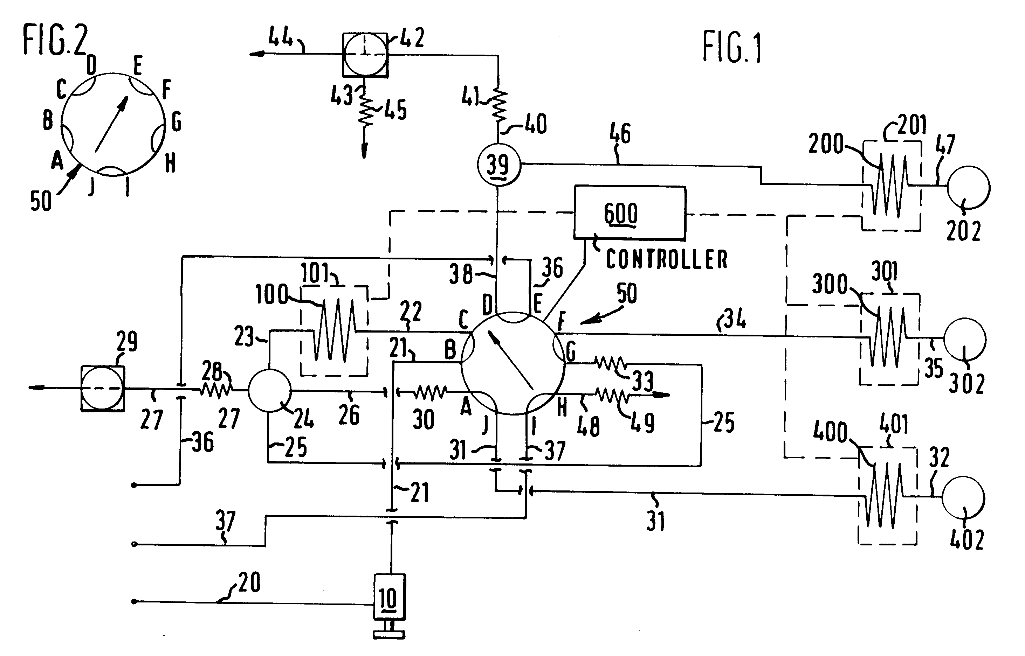

Referring now to Fig. 1 there may be seen a simplified diagrammatic view of one embodiment of a chromatographic analyzer of the present invention. More particularly, there may be seen four columns, i.e. column 100, column 200, column 300 and column 400. There may also be seen a 10-port valve 50, sample injector 10 and carrier gas supply lines 20, 36 and 37. It should be noted that the valve 50 has two operating positions and is depicted in its first operating position in Fig. 1 and in its second operating position in Fig. 2.

Continuing to refer to Fig. 1, a suitable inert carrier gas, which may be nitrogen, is injected into a line 20 which sweeps a hydrocarbon sample, which has been injected in the sample injector 10 by appropriate means, from the sample injector 10 through a line 21 into the valve 50. The line 21 is connected to a port B of the valve 50. The valve port B is internally connected to a valve port C when the valve 50 is in its first operating position. The valve port C is, in turn, connected to a line 22 which is, in turn, connected to the column 100, which may be a highly polar column.

The column 100 may be any suitable metal tubing and may have a length of from about 1 to about 3 metres and an inside diameter of from about 1.5 to about 3.0 millimetres. The column 100 may be a stainless steel tube having a length of about 3 metres and an inside diameter of about 2.3 millimetres to make the non-aromatics from aromatics separation. The mesh size is for example about 100/120 mesh.

The column 100 may be contained in a suitable temperature programmable oven 101 for maintaining the temperature of the column 100 at a constant temperature, as determined by a suitable controller or computer 600. The outlet from the column 100 is a line 23 which is interconnected with a splitter 24. The effluent from the highly polar column 100 in the line 23 is split into three portions by a splitter 24. A portion of the effluent travels down each of three lines 25, 26, 27. The line 27 includes a flow restricter 28 and a normally open solenoid valve 29. The outlet of the solenoid valve 29 is normally vented to the atmosphere.

The line 25 is connected to port G of the valve 50. However, the line 25 may also have a flow restricter 33 in its line. The port G of the valve 50 is connected to a port F of the valve 50 when the valve 50 is in its first operating position. The port F, in turn, is connected to a line 34 which is interconnected with the column 300. The column 300 is for example a 13X molecular sieve coated open tubular (MSCOT) column.

Finely ground 13X molecular sieve is combined with water to form a slurry which is pressured through a clean length of any suitable metal (such as stainless steel), fused silica, or glass capillary tubing. An inert gas purge is maintained through the tubing to dry the column and the temperature of the inert gas may be increased after the column is "dried" to stabilize the column and leave the 13X sieve particles attached to the wall of the tubing. The details of preparing such a column are not part of the present invention and will not be described in detail.

The finely divided particle layer provides a high resolution separation of naphthenes, normal paraffins, and isoparaffins with any coeluting olefins boiling up to about 255 °C by carbon number. The column 300 may be from about 50 metres to about 150 metres in length and may have an inner diameter of from about 0.1 millimetres to about 0.5 millimetres. The column 300 is for example about 100 metres of a fused silica capillary tube with an inner diameter of about 0.5 millimetres, for general analysis use. Fused silica can be used because of its ability to operate at lower temperatures and because it is inert. While metal tubing may be employed, some metals may cause "cracking" of the sample, and create a large "tail" from impurities which are sometimes found in metal tubing. For analysis of feedstocks that also are analyzed by the column 400 (as noted later herein) the column 300 has for example a length of about 50 metres. However, for analysis of products that do not contain olefins and if a C₅/C₆ ring naphthene separation is not important the column 400 may be eliminated and the column 300 then has for example a length of about 100 metres to achieve essentially the same separations as the column 400 would achieve. If a C₅/C₆ ring naphthene separation is important, the column 400 may still be eliminated (if no olefins are present) if the naphthene content is less than about 5%.

The column 300 may also be in a suitable temperature programmable oven 301. The temperature of the oven 301 may be programmed by, for example, a suitable computer or controller 600 to provide suitable heating of the column 300 to facilitate analysis of a sample. The heating program employed for the oven 301 depends upon the type and length of the column 300. For example, for an approximately 100 metres fused silica column having an about 0.50 millimetres inner diameter, the multi-level temperature programming may be: starting at about 70 °C, having an increasing ramp of about 10 °C/min up to about 150 °C, then 5 °C/min to about 240 °C and then a slower ramp of about 2 °C/min to about 320 °C to enhance separation. Other temperature programs may also be employed, as are well known in the art. The effluent from the column 300 is connected by a line 35 to a suitable detector 302. The detector 302 is for example a flame ionization detector.

A line 26 is connected to the port A of the valve 50. However, the line 26 preferably includes a flow restricter 30 in its line. The port A is interconnected with a port J of the valve 50 when the valve 50 is in its first operating position. The port J of the valve 50 is connected to a line 31 which is also interconnected with the column 400.

The column 400 is for example a less polar column than the highly polar column 100. The column 400 may be from about 100 metres to about 125 metres in length and have an inner diameter of from about 0.25 millimetres to about 0.32 millimetres and contain a uniform film of a less polar phase than column 100 of thickness from about 0.75 microns to about 1.0 microns. Examples of such less polar phases that are stable are methyl and phenyl silicone in fixed ratios, methyl silicone by itself, vinyl-phenyl-methyl silicone, polyethylene-polypropylene glycol or cyano-propyl silicone. The column 400 may be made from any suitable metal, fused silica, or glass tubing. For example, the column 400 is fused silica tubing having a length of about 100 metres and an inside diameter of about 0.25 millimetres, containing a uniform film of methyl silicone about 1.0 microns thick.

The column 400 may also be disposed in a suitable temperature programmable oven 401. The temperature of the oven 401 may be programmed by a suitable controller or computer 600 to provide suitable heating to the column 400 during its analysis. For example, for a 100 metres fused silica column having a 0.25 millimetres inner diameter containing a uniform 1.0 micron thick film of methyl silicone, the multi-level programming may be: starting at about 30 °C, having a gradually increasing rate of increase from about 1 °C/min to about 60 °C and then increasing the rate to about 5 °C/min to about 90 °C, and then about 20 °C/min to about 200 °C. Other temperature programs may be employed, as are well known in the art. The effluent from the column 400 is connected to a suitable detector 402 by line 32. For example, the detector 402 is a flame ionization detector.

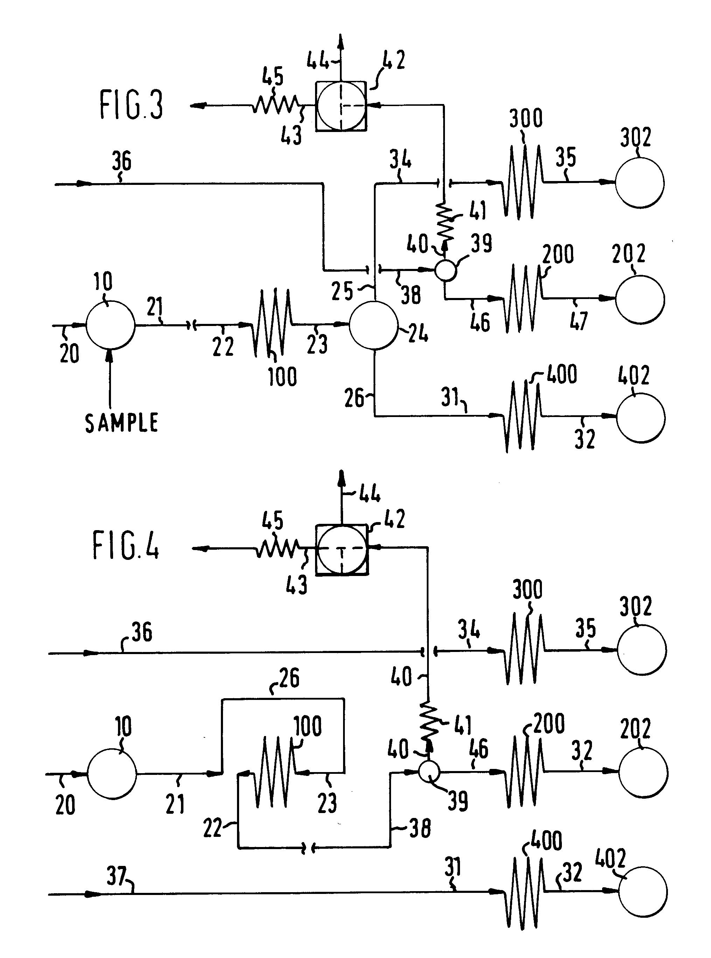

Fig. 3 depicts, in a simplified flow diagram, the hereinbefore described flow paths of Fig. 1 when the valve 50 is in its first operating position, but omits the valve 50. Fig. 2 illustrates the second operating position of the valve 50. In this second position the port A is interconnected with the port B, the port C is connected with the port D, the port E is connected with the port F, the port G is interconnected with the port H, and the port I is interconnected with the port J. This second operating position of the valve 50 which is illustrated in Fig. 2 is employed to backflush the aromatics portion of a hydrocarbon sample from the column 100 into the column 200. While this backflushing operation is occurring, separation is occurring on the columns 300 and 400.

Fig. 4 is a simplified flow diagram of the apparatus of Fig. 1 when the valve 50 is in its second operating position, but omits the valve 50.

Referring now to Fig. 1 and to Fig. 4, it may be seen that an appropriate inert carrier gas, which is preferably helium, is supplied to and flows down the lines 36 and 37 to the valve 50. The line 37 is connected to the port I of the valve 50 which, in the second operating position of the valve 50, is interconnected with the port J (see Fig. 2). The port J, in turn, is connected with the line 31 which is interconnected with the column 400. Thus, the line 37 supplies a carrier gas to the column 400 to allow this column to continue its analysis of the portion of the hydrocarbon sample which has been injected upon it, while the highly polar column 100 is being backflushed onto the column 200, and also during the analysis of the aromatics backflushed onto the column 200.

Continuing to refer to Fig. 1 and Fig. 4, the line 36 is interconnected with the port E of the valve 50 which, in its second operating position, is interconnected with the port F (see Fig. 2). The port F is, in turn, connected to the line 34 which is interconnected with the column 300. Thus, the line 36 supplies an appropriate inert carrier gas, which is preferably helium, to the column 300 during the backflushing of the highly polar column 100 onto the column 200 and also during the analysis of the aromatics backflushed onto the column 200.

Carrier gas 20 flowing through the injector 10 and the line 21 is interconnected with the line 26 when the valve 50 is in its second operating position (see Fig. 2). This allows the carrier gas 20 to flow through the line 26 into the splitter 24, the back down line 23, into the polar column 100. The retarded materials on the column 100 are then backflushed down the line 22 to the port C of the valve 50. The port C of the valve 50 is interconnected with the port D, when the valve 50 is in its second operating position (see Fig. 2). These backflushed materials pass out of the port D of the valve 50 down the line 38 to the splitter 39 where a portion of the effluent goes through the line 40 and the flow resistor 41. Also in the flowline 40 is a three-way solenoid valve 42, which connects to the line 43 containing a flow restrictor 45, and a line 44 which is normally vented to the atmosphere. The valve 42 is normally open and connects the line 40 to the line 44. However, when the valve 42 shuts, it interconnects the line 43 with the line 40, as depicted in Fig. 4.

The alternate path for the effluent from the column 100 is down the line 46 which is interconnected with the column 200. The column 200 is preferably a less polar column than the highly polar column 100. However, the column 200 may contain substantial amounts of polar material to enhance the separation of the aromatic components, but should be less polar than the highly polar column 100. Examples of such less polar materials are phenyl and methyl silicone in various ratios or methyl silicone alone, or any other material noted hereinbefore for use in the column 400. The column 200 may be from about 10 metres to about 25 metres in length and have an inner diameter of from about 0.30 millimetres to about 0.50 millimetres and contain a uniform phase layer having a thickness of about 1 micron to about 8 microns. The column 200 may be made from any suitable metal, fused silica, or glass capillary tubing. For example, the column 200 is a fused silica tubing having a length of about 25 metres and an inside diameter of about 0.32 millimetres, containing a uniform layer of methyl silicone or phenyl-methyl silicone about 5.0 microns thick.

The column 200 may also be contained in a temperature programmable oven 201. The oven 201 is preferably the same as the oven 401, i.e. the oven 401 may contain both the column 200 and the column 400. When the column 200 is in the oven 401, the length and coating thickness of the column 200 as well as the flow rate of carrier gas through the column 200 are optimized for the best separation of aromatics while undergoing the temperature program of the oven 401. When the column 200 is in its own separate oven 201, a suitable temperature program may be employed depending upon the length, coating thickness and flow rate of the column 200. Suitable temperature programs are well known in the art. The column 200 is preferably interconnected with a suitable detector 202 by a line 47. For example, the detector 202 is a flame ionization detector.

The operation of the analyzer, including operation of the valves, the temperature programming of the ovens, and the recording of any output from the detectors may be under the control of a suitable computer/controller 600. This computer/controller may also include suitable data manipulation and output formating functions. The detectors (202, 302, 402) may alternatively include appropriate chart recorders and/or analog-to-digital converters for input into the computer/controller 600.

The operation of the process analyzer of the present invention is described as follows. The sample is injected into the analyzer through the sample injector 10 and carried by the carrier gas 20 into the column 100. The column 100 retards the aromatics of the sample and allows the remainder of the sample and carrier gas to pass out through the line 23. The effluent from the column 100 is then split with a portion of it venting to atmosphere and the remaining portions being diverted to the column 300 and the column 400 through appropriate valving and line connections as discussed hereinabove. This is most easily seen in Fig. 3.

Before benzene would elute from the column 100, the valve 50 is switched from its first operating position to its second operating position (which is indicated in Fig. 2). Simultaneously with the switching of the valve 50, the normally open solenoid valve 29 is closed and the flow restrictor 49 in the line 48 is employed with the flow restrictor 33 in the line 25 to prevent incomplete back-flushing of the column 100. The carrier gas from the line 37 is now supplied to the column 400 as noted hereinabove and the oven 401 begins its temperature program. The carrier gas from the line 36 is now supplied to the column 300 as noted hereinabove and the oven 301 begins its temperature program.

The column 300 which is preferably a 13X MSCOT (molecular sieve coated open tubular) column separates the isoparaffins and any coeluting olefins, normal paraffins and naphthenes by carbon number. These isoparaffins and any coeluting olefins, normal paraffins, and naphthenes, are detected by the detector 302 by carbon number. The column 400 which is for example fused silica less polar coated column, is used to separate individually the paraffins, naphthenes and olefins, which are detected by a suitable detector 402. As noted hereinbefore, if there is less than about 5% naphthenes (when C₅/C₆ ring separation is important) and there are no olefins present (typically a product as opposed to a feedstock) then the column 400 may be eliminated and the column 300 lengthened somewhat to obtain better component separations.

Concurrent with the separation occurring on the columns 300 and 400, the column 100 is being backflushed into the column 200. This is most clearly illustrated in Fig. 4. This backflushing of the column 100 sweeps the aromatics that were retarded on the column 100 into the column 200. After the aromatics are swept from the column 100 into the column 200 the carrier gas flow through the column 200 is increased in a stepwise manner. This is accomplished by closing the three-way valve 42 which then places the flow restrictor 45 into the flow path and accordingly more carrier gas is injected into the column 200. This increased gas flow is the gas flow for optimal separation on the column 200, as noted hereinbefore. The time to increase the carrier flow for the column 200 is related to the time employed to switch the valve 50 from its first operating position to its second operating position. That is, the carrier flow is increased at approximately two and one-half times the length of time at which the valve 50 is switched to its second operating position.

Separation by carbon number of the normal paraffins, isoparaffins with coeluting olefins, and naphthenes occur on the 13X MSCOT (molecular sieve coated open tubular) column. At the end of the run the olefins may be subtracted out of this data based on the identification of the individual olefins from the column 400. This leaves, by carbon number, the paraffins, both iso and normal, and the naphthenes obtained from the 13X MSCOT (molecular sieve coated open tubular) column. The column 400 includes a detailed component separation of the individual naphthenes through at least about C₈. As noted hereinabove, the individual olefins are also identified on this column.

For those products or feedstocks that do not contain olefins and contain less than about 5% naphthenes (when C₅/C₆ ring splits are important), the separation of individual components from the column 400 may be duplicative of the separation obtained on only the column 300 if the column 300 is lengthened slightly, as discussed hereinbefore. Thus, when no olefins (or a minimal amount of olefins) and less than about 5% naphthenes (when C₅/C₆ ring splits are important), are present, the column 400 may be eliminated and the column 300 increased in length to achieve essentially the same separation.

For those products or feedstocks that have a very high naphthene content (i.e. such that binaphthenes and higher naphthenes are present), any bi- and higher naphthenes will not elute before benzene and will thus be included in the held up aromatics portion in the column 100. However, these bi- and higher naphthenes may be separated and detected separately from the aromatics by the column 200 and its associated detector 202. The computer/controller 600 may then take the data for these bi- and higher naphthenes and insert it in the appropriate table or chart corresponding to the components identified by the column 400 and/or the column 300.

Thus, the computer/controller 600 may know for all the columns employed what elution times (and corresponding peaks) correspond to what components by column and may make appropriate data adjustments, such as those described hereinbefore, for the final output data from the analyzer of the present invention.

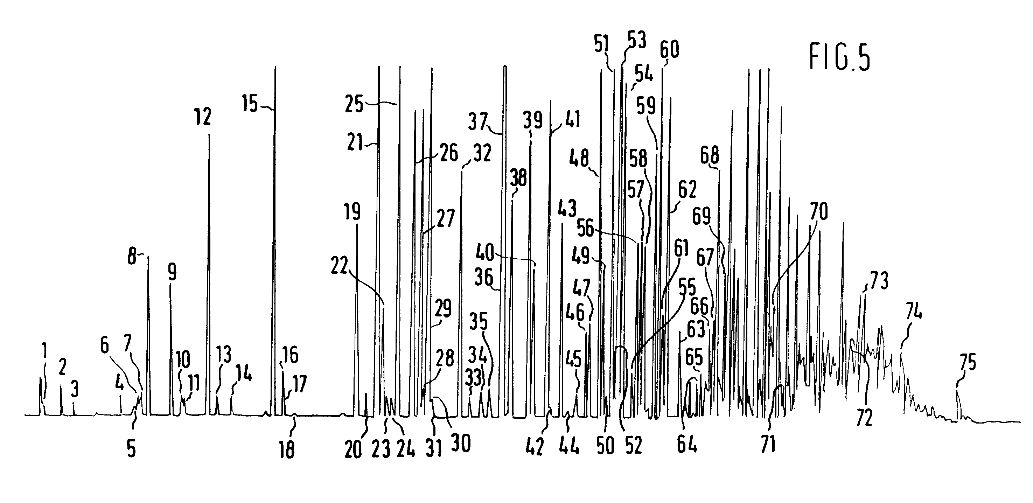

Fig. 5-7 depict component separations that reasonably portray the actual data from the columns of the apparatus of the present invention.

Fig. 5 depicts the component separation of a representative hydrocarbon sample, including olefins, from the column 400 as detected by the detector 402. The column 400 separates the sample by individual components from C₁ through at least C₁₁. The column used for this chromatogram was an approximately 100 metres fused silica tubing having an inside diameter of about 0.25 millimetres, containing a uniform coating of methyl silicone about 1.0 microns thick and subjected to the temperature program noted hereinbefore as an example for the column 400. Normally, only C₁ through about C₉ are identified from a practical standpoint, as extensions beyond about C₉ require the identification of a large number of peaks that are usually of little or no interest. The peaks identified in Fig. 5 are defined in Table 1.

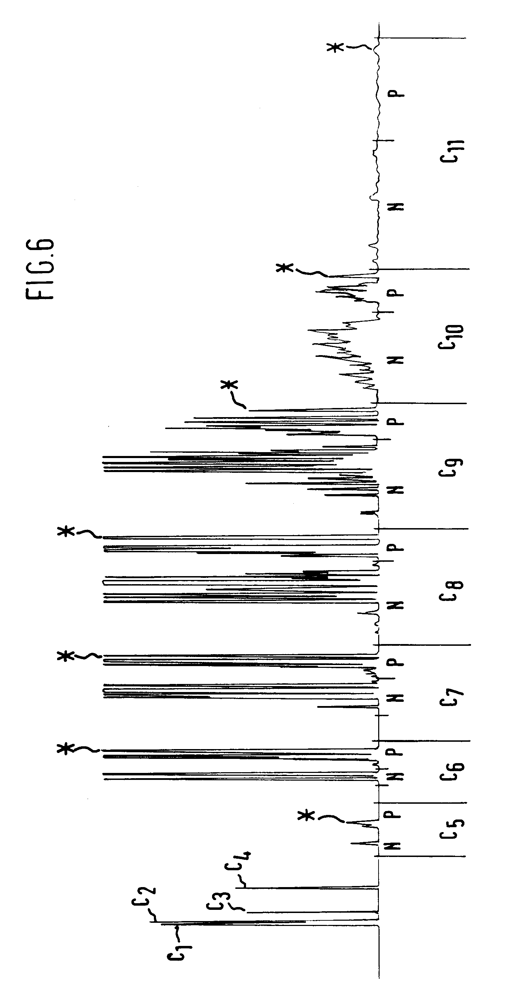

Fig. 6 depicts the component separation of the representative sample of Fig. 5 obtained by the column 300 as detected by the detector 302. It illustrates the separation of the normal paraffins and isoparaffins with coeluting olefins from the naphthenes by carbon number through C₁₁. The column used for this chromatogram was an approximately 100 metres stainless-steel tubing having an inside diameter of about 0.5 millimetres, prepared as noted hereinbefore, and subjected to the temperature program noted hereinbefore as an example for the column 300. The normal paraffin peak (P) is denoted by an asterisk immediately above the peak for each carbon number between C₅ and C₁₁, as shown in the example, Fig. 6; however, separation of paraffins, naphthenes and olefins can be made through C₁₄

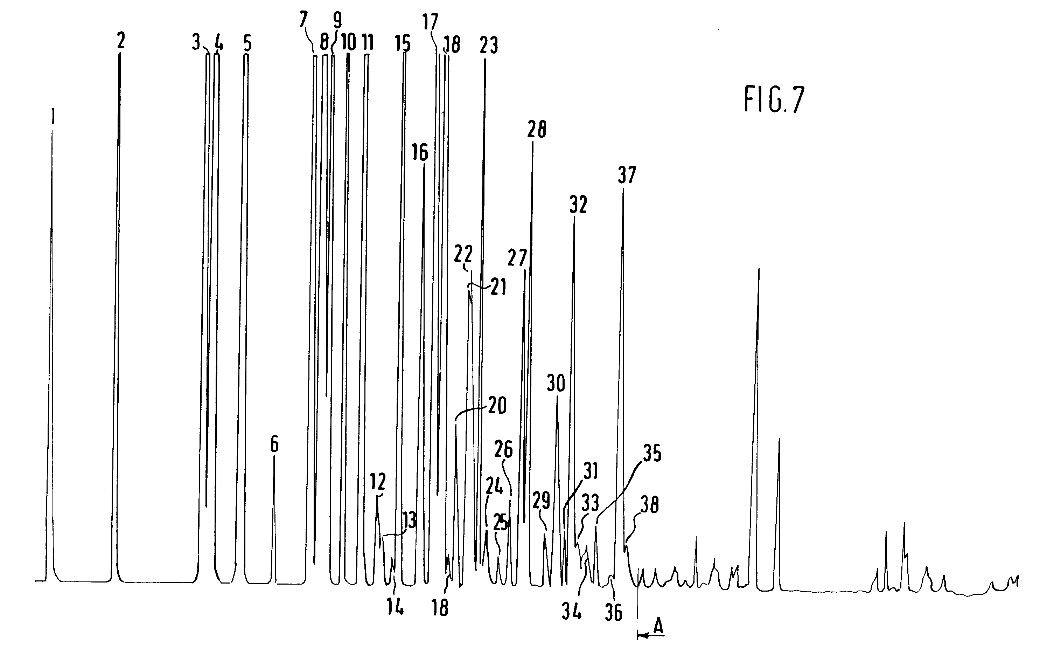

Fig. 7 depicts the aromatic components separation of the sample of Fig. 5 obtained by the column 200 as detected by the detector 202. The column used to obtain this chromatogram was an approximately 25 metres fused silica tubing having an interior diameter of about 0.32 millimetres, containing about a 5 micron thick coating of 5% phenyl/95% methyl silicone, and subjected to the temperature program of column 400, noted hereinbefore as an example. The peaks identified in Fig. 7 are defined in Table 2. As illustrated in Fig. 7, additional peaks are detected but are not normally identified for practical reasons, as noted hereinbefore, but are summed all together to obtain a greater than about C₁₁ identification. The start of the summation is indicated at A.

The column employed as the column 100 to make the aromatics from non-aromatics separation for Fig. 5-7 was an approximately 3 metres stainless steel tubing having an inside diameter of about 2.3 millimetres, and held isothermally at a temperature of 120 °C.

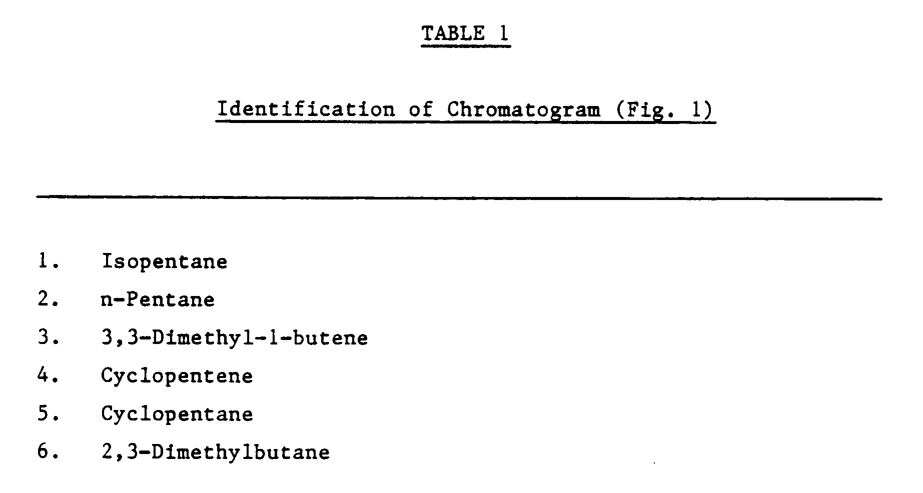

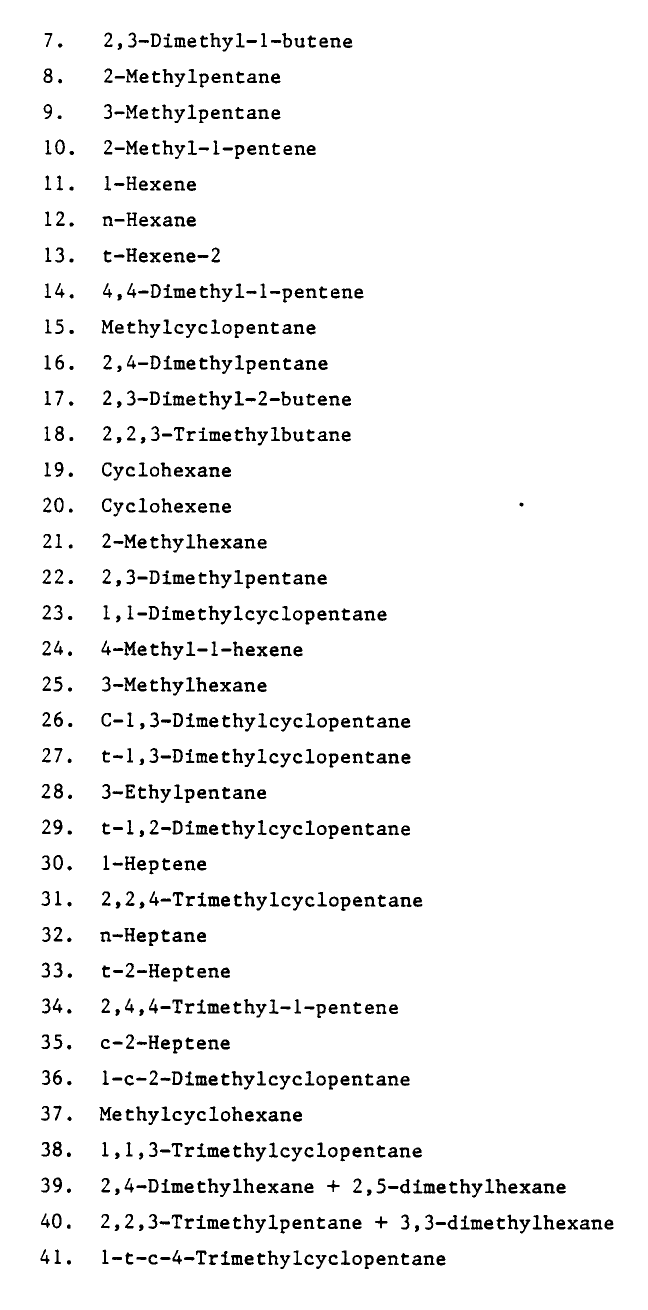

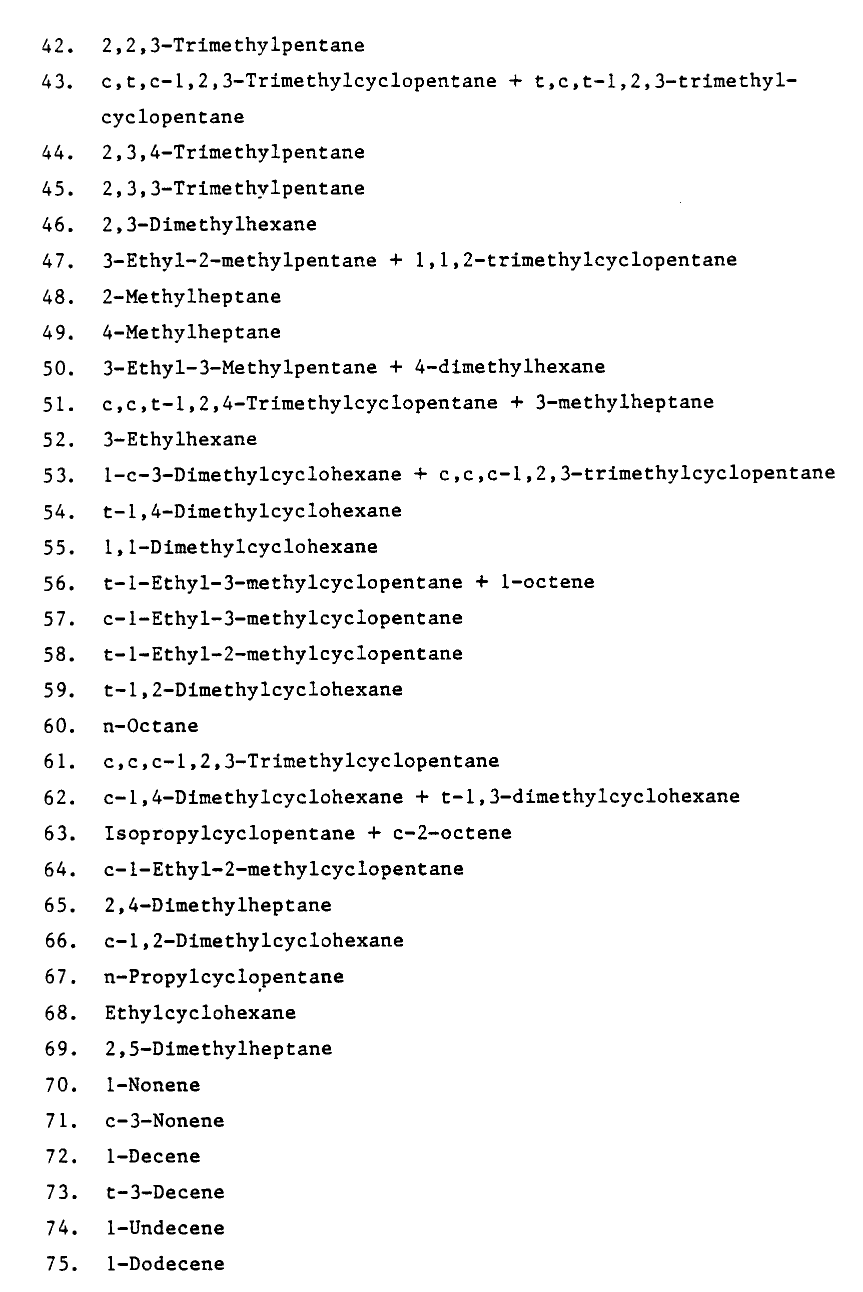

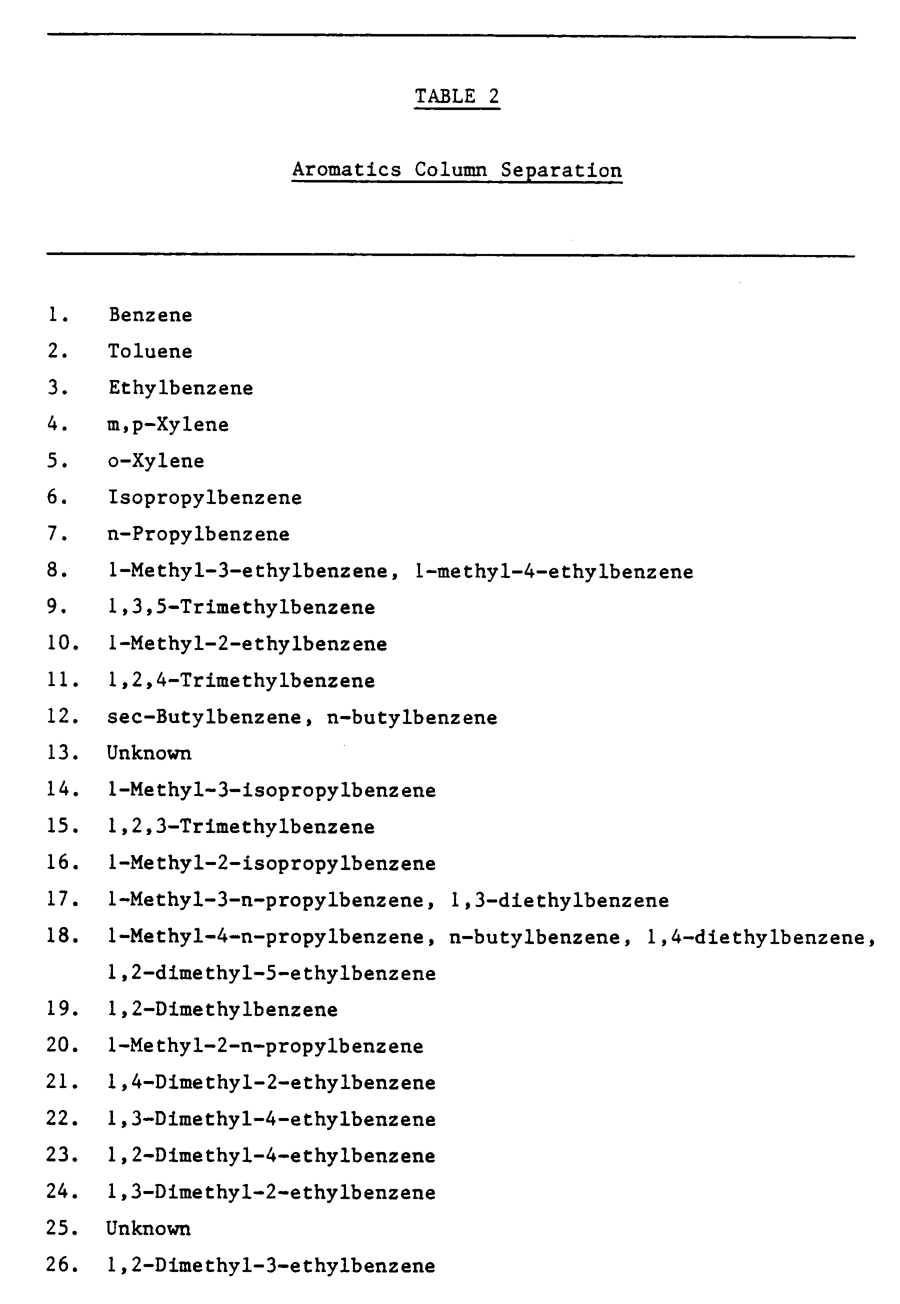

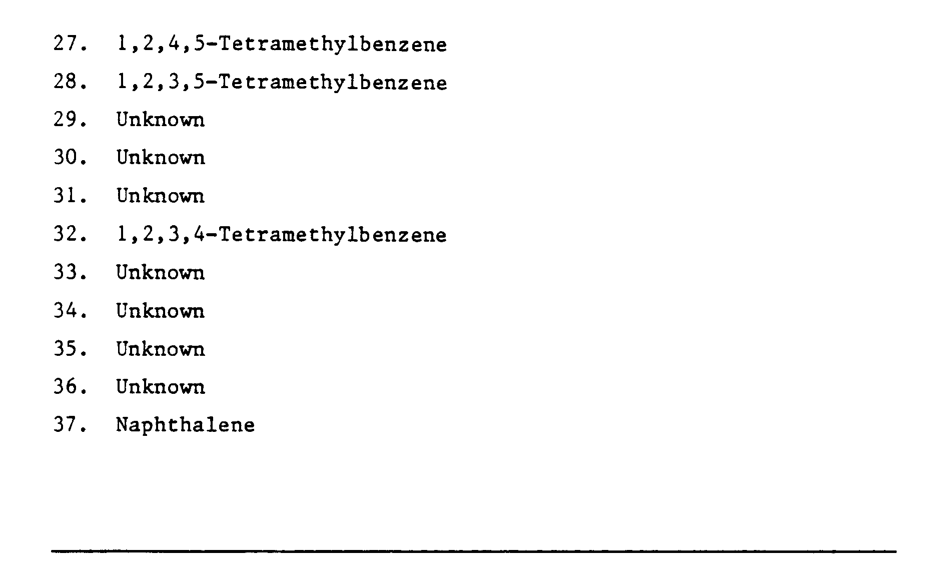

As noted hereinbefore, the computer/controller 600 may be employed to shift data corresponding to various components from one column to another based upon known component elution times for each column. Accordingly, the olefins present in Fig. 6 may be subtracted out based upon the amount and specific olefin present, as identified in Fig. 5 (Table 1).

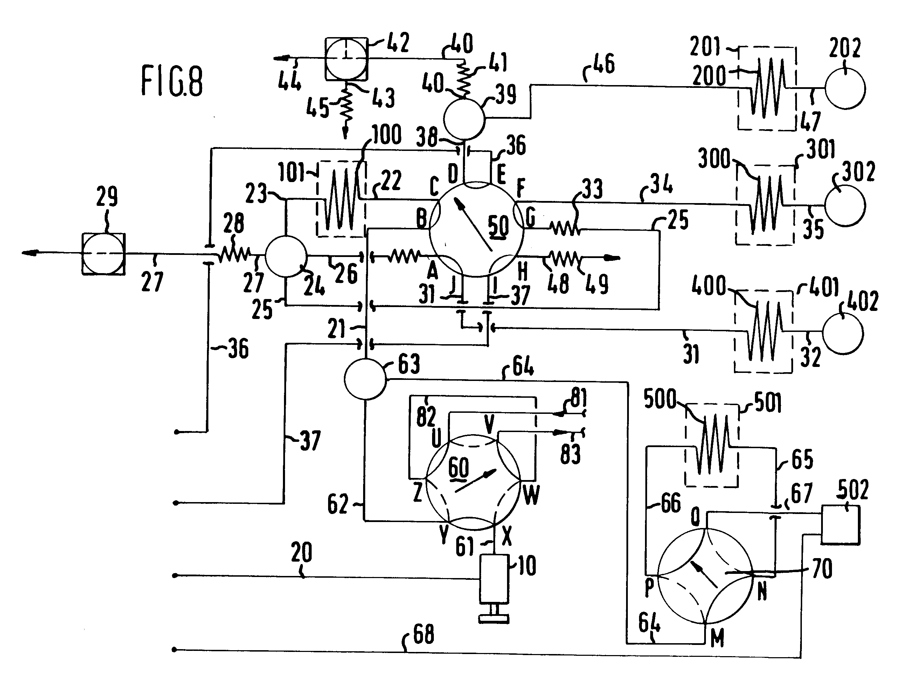

Referring to Fig. 8 an alternative embodiment of the present invention is provided in which an additional fifth column for detecting a preselected inorganic component is incorporated with the apparatus of Fig. 1. More particularly, a fifth column 500 to measure a preselected inorganic component, is added to the apparatus of Fig. 1. In a similar manner, the method of the present invention may also include a step for determining at least one preselected inorganic component of a hydrocarbon sample.

The column 500 may be a packed column suitable for determining the amount of hydrogen in the sample. Alternatively, the column 500 may be a column for determining nitrogen, the amount of sulphur components or other heteroatom components in the sample.

The sample to be analyzed may again be injected into the sample injector 10. The sample is carried from the injector 10 by carrier gas from the line 20 into a line 61. The line 61 is connected to the port X of the valve 60. The valve 60 is a two-position six-port valve. In its first operating position, the ports of the valve 60 are interconnected as indicated in Fig. 8 by the solid lines. In its second operating position, the ports of the valve 60 are interconnected as indicated by the dashed lines.

The first position of the valve 60 may be employed to allow a sample from the injector 10 to be supplied to the various columns for analysis. That is, the port X is interconnected with the port Y to which the line 62 is connected. Thus, the sample is swept into the line 62 from injector 10 by the carrier gas supplied by the line 20. The line 62 is also connected to the splitter 63 which diverts a portion of the sample to the line 64 and to the line 21. The line 21 is the sample supply line for the apparatus of Fig. 1 which operates as described hereinbefore.

The line 64 is the sample supply line for the column 500 and is connected to the port M of the valve 70. The valve 70 is a two-position four-port valve. In its first operating position, as indicated by solid lines in Fig. 8, the port M is interconnected with the port N. The port N is connected to the line 65 which is also connected to the input of the column 500.

The column 500 is employed to analyze the sample for preselected inorganic components such as hydrogen, nitrogen, sulphur compounds, or other heteroatom components. For hydrogen gas, the column 500 is preferably a stainless steel tubing of about 1.5 metres in length and having an inside diameter of about 2.3 millimetres. The column 500 may also be in a temperature programmable oven 501, which may also be controlled by the controller 600 (see Fig. 1).

The column 500 is also connected to the line 66. The line 66 is also connected to the port P of the valve 70. In its first operating position, as indicated by solid lines in Fig. 8, the port P is interconnected to the port Q. The port Q is connected to the line 67 which also is connected to a detector 502. For hydrogen detection, the detector 502 is for example a thermal conductivity detector.

The valve 70 in its second operating position, as indicated by the dashed lines in Fig. 8, is employed to backflush the column 500 into the detector 502. When the detector 502 is a thermal conductivity detector it may also need a separate supply of carrier gas which is supplied by line 68.

As also depicted in Fig. 8, the valve 60 may be employed to circulate a portion of a product or feedstock through a sample loop 82 on the valve 60 through a supply line 81 and a return line 83. When this portion of the apparatus depicted in Fig. 8 is so employed, the injector 10 need not be used to provide a sample for analysis. When the valve 60 is moved to its second position, the carrier gas from the line 20 sweeps the sample from the sample loop 82 into the line 62 where it is split and analyzed as noted hereinbefore. The valve 60 may be so employed with the apparatus of Fig. 1 even when the column 500 is not employed with the apparatus of Fig. 1.

Many other variations and modifications may be made in the apparatus and techniques hereinbefore described by those having experience in this technology without departing from the concepts of the present invention. Accordingly, it should be understood that the apparatus and methods depicted in the accompanying drawings and referred to in the foregoing description are illustrative only and are not intended as a limitation on the scope of the invention.

## Claims

1. An apparatus for analyzing a hydrocarbon sample for iso-paraffins, normal paraffins, naphthenes, aromatics (and olefins, if present) comprising means for providing a sample; means for supplying gas connected to said sample providing means; valve means connected to said sample providing means; a first highly polar gas chromatographic column having a length of from 1 to 3 metres and an inner diameter of from 1.5 to 3.0 millimetres, connected to said valve means, for separating the aromatics fraction from the non-aromatics fraction; the said first column being selectively interconnected with a second column, which is a 13X molecular sieve open coated capillary column from 50 to 150 metres in length and having an inner diameter of from 0.1 to 0.5 millimetres, for separating isoparaffins and co-eluting olefins, normal paraffins and naphthenes by carbon number; and with a third less polar column which is not a mixed binary phase column from 100 to 125 metres in length and having an inner diameter of from 0.25 to 0.32 millimetres and containing a uniform film of a stable less polar phase of a thickness of from 0.75 to 1.0 microns, which third column separates the individual paraffins and naphthenes and olefins; or with a fourth less polar column from about 10 to 25 metres in length and having an inner diameter of 0.30 to 0.50 millimetres for separating the individual aromatics; and means for controlling the temperature of each column.

2. The apparatus as claimed in claim 1, further comprising means for splitting the sample before it is passed through the first polar column and means for supplying a portion that is split off to a fifth column for separating predetermined inorganic compounds and means for detecting the amount of predetermined compound that is separated by this column.

## Patentansprüche

1. Vorrichtung zum Analysieren einer Kohlenwasserstoffprobe auf Isoparaffine, n-Paraffine, Naphthene, aromatische Verbindungen (und Olefine, soweit vorhanden), umfassend Mittel zur Zuführung der Probe, Mittel zur Zuführung von Gas, die mit den Probe-aufnehmenden Mitteln verbunden sind, Ventile, die mit dem Probe-aufnehmenden Mitteln verbunden sind, eine erste hochpolare gaschromatographische Säule mit einer Länge von 1 bis 3 m und einem Innendurchmesser von 1,5 bis 3,0 mm, die mit dem Ventil verbunden ist, zur Abtrennung der Aromatenfraktion von der Nicht-Aromatenfraktion, wobei die erste Säule selektiv mit einer zweiten Säule verbunden ist, bei der es sich um eine Säule mit einem 13X Molekularsieb mit offen beschichteten Kapillaren von 50 bis 150 m Länge und einem Innendurchmesser von 0,1 bis 0,5 mm handelt, zur Abtrennung der Isoparaffine und zur Co-Eluierung von Olefinen, n-Paraffinen und Naphthenen nach der Kohlenstoffzahl; und mit einer dritten weniger polaren Säule, die keine, gemischt binäre Phasensäule ist, von 100 bis 125 m Länge und einem Innendurchmesser von 0,25 bis 0,32 mm und enthaltend einen gleichförmigen Film aus einer stabilen weniger polaren Phase mit einer Dicke von 0,75 bis 1,0 µm, wobei die dritte Säule die einzelnen Paraffine und Naphthene und Olefine auftrennt, oder mit einer vierten weniger polaren Säule von etwa 10 bis 25 m Länge und einem Innendurchmesser von 0,30 bis 0,50 mm zur Auftrennung der einzelnen Aromaten, und Mitteln zur Steuerung der Temperatur jeder Säule.

2. Vorrichtung nach Anspruch 1, die ferner umfaßt Mittel zur Aufspaltung der Probe, bevor sie durch die erste polare Säule geleitet wird, und Mittel zur Zufuhr eines Teils, der abgetrennt worden ist in eine fünfte Säule, zur Abtrennung vorbestimmter anorganischer Verbindungen, und Mittel zur Bestimmung der Menge der vorbestimmten Verbindung, die von dieser Säule abgetrennt wird.

## Revendications

1. Un appareil destiné à analyser un échantillon d'hydrocarbures quant aux isoparaffines, aux paraffines normales, aux naphthènes, aux produits aromatiques (et aux oléfines, si elles sont présentes) comprenant des moyens destinés à réaliser un échantillon; des moyens d'amenée de gaz reliés auxdits moyens de réalisation d'échantillons; des moyens de valve reliés auxdits moyens de réalisation d'échantillons; une première colonne de chromatographie gazeuse hautement polaire, d'une longueur comprise entre 1 et 3 mètres et d'un diamètre intérieur de 1,5 à 3,0 millimètres, reliée auxdits moyens de valve pour séparer de la fraction des produits non aromatiques la fraction des produits aromatiques; ladite première colonne étant reliée de façon sélective à une deuxième colonne qui est une colonne capillaire revêtue ouverte à tamis moléculaire 13X d'une longueur de 50 à 150 mètres et d'un diamètre intérieur compris entre 0,1 et 0,5 millimètre pour séparer les isoparaffines et coéluer les oléfines, les paraffines normales et les naphthènes par nombre d'atome de carbone; et à une troisième colonne moins polaire qui n'est pas une colonne à phase binaire mélangée, d'une longueur de 100 à 125 mètres et d'un diamètre intérieur compris entre 0,25 et 0,32 millimètre et contenant une pellicule uniforme d'une phase stable moins polaire d'une épaisseur comprise entre 0,75 et 1,0 micron, cette troisième colonne séparant les paraffines et les naphthènes et les oléfines individuels; ou à une quatrième colonne moins polaire d'une longueur de 10 à 25 mètres environ et d'un diamètre intérieur de 0,30 à 0,50 millimètre pour séparer les produits aromatiques individuels; et des moyens de réglage de la température de chaque colonne.

2. L'appareil selon la revendication 1 comprenant en outre des moyens de fractionnement de l'échantillon avant son passage à travers la première colonne polaire et des moyens d'amenée d'une partie qui est fractionnée vers une cinquième colonne pour séparer des composés inorganiques prédéterminés et des moyens pour détecter la quantité de composés prédéterminés qui est séparée par cette colonne.
